Europäisches Patentamt

(19) European Patent Office

Office européen des brevets

(11) Publication number: **0 008 836**
A1

# EUROPEAN PATENT APPLICATION

(21) Application number: 79200486.3

(22) Date of filing: 04.09.79

(51) Int. Cl.³: **C 08 J 9/14**
**C 08 L 23/06**

(30) Priority: 05.09.78 US 939507

(43) Date of publication of application:
19.03.80 Bulletin 80/6

(84) Designated Contracting States:
BE DE FR GB NL SE

(71) Applicant: THE DOW CHEMICAL COMPANY
2030 Abbott Road Post Office Box 1967
Midland Michigan 48640(US)

(72) Inventor: Taylor, Allen Richmond
2207 Woodlawn Portsmouth
Scioto, Ohio(US)

(74) Representative: Davidson, Cornelis Marinus
Reinder et al,
Octrooibureau Vriesendorp & Gaade B.P. 266
NL-2501 AW Den Haag(NL)

(54) Process for the preparation of polyolefin foams.

(57) A polyethylene foam is prepared by heating normally solid aliphatic polyethylene at heat-plastifying temperatures between 90° and 200°C in admixture with from 0.02 to 0.31 gram molecular proportion of 1-chloro-1, 1,2,2-tetrafluoroethane or 1-chloro-1, 2,2,2-tetrafluoroethane per 100 grams of the polyethylene, under pressure to form a flowable gel and extruding the gel into a zone of lower pressure sufficient to expand the extruded gel.

EP 0 008 836 A1

Croydon Printing Company Ltd.

-1-

## PROCESS FOR THE PREPARATION OF POLYOLEFIN FOAMS

This invention relates to a process for making polyethylene foams using certain volatile organic compounds as blowing agents to give closed cell foams composed largely of substantially uniform fine cells.

It is well known to make closed cell polyethylene foams by the process of extrusion foaming wherein a normally solid polyethylene is heat-plastified and mixed under pressure with a volatile material such as 1,2-dichlorotetrafluoroethane to form a flowable gel which is then passed through a shaping orifice or die opening into a zone of lower pressure. Boyer et al. U.S. Patent 3,327,031 describes one such process modified by mechanical shearing means to provide a super-fine cell structure. It discloses more than forty suitable blowing agents including 1-chloro-1,1,2,2--tetrachloroethane and 1-chloro-2,2,2-trichloroethane. Yet extrusion technology is a highly empirical art. As shown herein, the blowing agents of U.S. Patent 3,327,031 are not as a class effective in producing dimensionally stable foams of low density polyethylene.

27,053-F

One of the common requirements for acceptable foam resin products is dimensional stability, i.e., it is desired that the linear dimensions and thus the volume of a piece of foam resin not change appreciably, either to shrink or to expand, under ordinary conditions, from the time its manufacture is complete until the time its ultimate useful life is ended. 1,2-Dichlorotetrafluoroethane has been used successfully to produce various commercial closed cell polyethylene foams. However, 1,2--dichlorotetrafluoroethane has recently been cited as a potential environmental hazard related to depleting the earth's stratospheric ozone layer. Thus alternate blowing agents are desirable.

In accordance with this invention, a normally solid polyethylene is heat-plastified and mixed under pressure with 1-chloro-1,1,2,2--tetrafluoroethane or preferably 1-chloro-1,2,2,2--tetrafluoroethane to form a flowable gel which is then passed through a die opening into a zone of significantly low pressure to cause expansion of the gel to form a dimensionally stable fine--cell substantially closed-cell polyethylene foam. The volatile blowing agent can be employed in an amount corresponding to from 0.02 to 0.31, preferably from 0.04 to 0.22, gram mole of 1-chloro--1,1,2,2-tetrafluoroethane or 1-chloro-1,2,2,2--tetrafluoroethane per 100 grams of polyethylene.

Any normally solid, heat plastifiable polyethylene can be employed in making the foams by the process of this invention.

27,053-F

In practice the polyethylene foams are prepared by placing the molten polyethylene under pressure of the 1-chloro-1,2,2,2-tetrafluoroethane or 1-chloro-1,1,2,2-tetrafluoroethane blowing agent such as by heating the materials in admixture with one another in a pressure resistant vessel at temperatures between about 90° and 200°C, suitably at a temperature at least as high as the melting point of the polymer, until a uniform or substantially uniform flowable gel is obtained.

The temperature at which the gel is extruded will vary depending primarily upon the melting point of the polyethylene and the proportions of the polyethylene and the 1-chloro-1,2,2,2-tetrafluoroethane or 1-chloro-1,1,2,2-tetrafluoroethane employed. In general, the gel can be extruded at a temperature of from about 25°C below the temperature at which crystallization of the polyethylene causes an observable cloudiness of the gel to a temperature of 25°C or higher above the melting point of the polyethylene. The temperature at which crystallization of the polyethylene causes a cloudiness of the gel can readily be determined by sealing weighed amounts of the polyethylene and the 1-chloro-1,2,2,2-tetrafluoroethane or 1-chloro-1,1,2,2-tetrafluoroethane in a glass tube, heating the mixture to a temperature above the melting point of the polyethylene to obtain a transparent uniform gel, then cooling or allowing the gel to cool and observing the temperature at which the gel becomes hazy or cloudy. The temperature at which an observable cloudiness of the gel occurs is herein referred to as the "cloud point".

27,053-F

The process can be carried out batchwise or in continuous manner. In a preferred practice for making a polyethylene foam in a continuous manner, the normally solid polyethylene suitably in granular form is fed to a plastics extruder wherein it is heat-plastified and blended with the volatile 1-chloro-1,2,2,2-tetrafluoroethane or 1-chloro-1,1,2,2-tetrafluoroethane blowing agent under pressure in a desired proportion to form a homogeneous flowable composition, which composition is brought to a substantially uniform temperature between about 90° and 200°C throughout its mass and is thereafter extruded or discharged through a suitable orifice into a zone of lower pressure, e.g. the atmosphere, wherein the extruded material expands to form a cellular body which is cooled and cut into pieces suitable for convenient handling.

Finely divided solid materials such as calcium silicate, zinc stearate, magnesium stearate and the like and mixtures thereof can advantageously be incorporated with the polymer or gel prior to expanding the same. Such finely divided materials aid in controlling the size of the cells, and are usually employed in amounts up to 3 percent by weight of the polymer.

The invention provides an improved and economical method for making cellular foams from polyethylene useful for a variety of purposes, e.g. as cushion packaging, flexible insulation or fillers for life jackets. The products possess a

27,053-F

highly uniform fine cell structure consisting for the most part of thin-walled individually-closed cells, and are flexible, resilient, tough, chemically inert and have good dimensional stability.

For the present purposes, dimensional stability of the foam refers to changes which occur in foam volume, particularly in later stages of manufacture and during subsequent storage of the foam product. The dimensional stability of the foam products is measured by observing the changes in volume occurring in a test specimen of the foam as a function of time. The test specimen is obtained by quickly cutting from the foam product soon after its formation, e.g. within five minutes, a test piece of foam and accurately measuring its overall volume, e.g. by cubic displacement of water. This initial volume is arbitrarily selected as the bench mark volume for dimensional stability tests. The foam specimen is exposed to air at atmospheric pressure and ordinary room temperature; its volume is re-measured from time to time and related on volume percentage basis to the initial volume.

In general manufacturing practice, a polyolefin foam is considered to have acceptable dimensional stability if the minimum volume to which the foam body shrinks is not less than 85, preferably not less than 90, percent of the initial bench mark volume, and if the volume of the foam body four weeks, preferably three weeks, after its extrusion is not less than 90 percent of the initial volume and is substantially constant thereafter under ambient atmospheric conditions. The

27,053-F

0008836

term "dimensionally stable" in reference to the subject polyethylene foams is used herein in the sense of the foregoing definitive description.

The specific working examples that follow further illustrate the invention. In the examples, parts and percentages are by weight unless otherwise specified or required by the context.

Example 1

Polyethylene foams were made by continuous extrusion from a conventional screw-type extruder having 1.25 inch (3.2 cm) diameter. The extruder comprises the usual sequential zones usually denominated feed zone, compression and melt zone, metering zone, and mixing zone. The barrel is provided with conventional electrical heaters for zoned control and with usual instrumentation. The discharge end of the mixing zone of the extruder is connected through a cooler providing a cooling and temperature control zone, to a die orifice having generally rectangular configuration 0.25 inch (0.64 cm) wide with gap of approximately 0.15 inch (0.38 cm). An inlet opening for fluid blowing agent under pressure and feed rate control is provided in the process stream near the discharge end of the extruder.

In practice, polyethylene resins in the form of common granules are fed through the feed hopper to the extruder at rate of approximately 12 pounds (5.44 kg) per hour. The temperature in the metering zone is maintained at about 180°C.

27,053-F

Blowing agent is pumped into the inlet at predetermined rate under pressure to maintain liquid phase. The mixed mass of molten polymer and blowing agent is cooled in the temperature control zone to a substantially uniform temperature which is just above the temperature at which solid polyethylene would crystallize out of the gel before passing through the die orifice. The mass emerging from the die orifice to atmospheric pressure expands and forms a cellular foam which is continuously carried away from the die as the foam forms, cools and hardens to a strip of foamed, cellular, flexible solid resin approximately 1.0 inch (2.54 cm) thick and 1.3 inches (3.30 cm) wide.

In the tests described below in this example, there was used a solid resinous polyethylene having density of 0.918 gram per cubic centimeter in the form of molding granules. They were mixed in a mixer with powdered zinc stearate and talc as foam nucleation and cell size control agent, in concentrations shown in Table I. The blowing agent comprised 1-chloro-1,2,2,2--tetrafluoroethane fed to the inlet at substantially constant rate as shown in Table I. For purposes of comparison, foams were also made using 1,2--dichlorotetrafluoroethane; 1,1,1-trifluoro-2--chloroethane and 1-chloro-1,1-difluoroethane blowing agents outside the scope of the invention. From the resulting extruded foam products there were cut rods at about 5 minutes after extrusion. These rods were about 8 inches (20.3 cm) long in the direction of the extrusion, about 1.3 inches (3.30 cm) wide and about 1.0 inch (2.54 cm) thick.

27,053-F

Four of such rods were joined together into bundles. The overall volumes of these bundles were promptly and accurately measured by cubic displacement of water. Their apparent or bulk density was also measured and computed as pounds per cubic foot ($kg/m^3$) as recorded in Table I. The volumes of the bundles were re-measured at different time intervals as hereinbefore described; these volumes, as percentages of the initial volume, are recorded in Table I.

27,053-F

TABLE I

| Test No. | PE Rate (1) | BA (2) | Rate (3) | N.A. (4) Talc/Z.S. (5) |
|---|---|---|---|---|
| 1.1 | 12.2 (5.53) | B* | 2.60 (1.18) | 0.06/0.048 |
| 1.2 | 13.4 (6.08) | L* | 1.89 (0.86) | 0.067/0.054 |
| 1.3 | 13.0 (5.90) | O* | 1.96 (0.89) | 0.065/0.052 |
| 1.4 | 11.8 (5.35) | W | 1.50 (0.68) | 0.03/0.024 |

27,053-F

TABLE I (Continued)

| Test No. | Density pcf (6) | Volume % after time in days | | | | | |
|---|---|---|---|---|---|---|---|
| | | 1 | 5 | 8 | 12 | 25 | 29 |
| 1.1 | 2.01 (32.2) | 93 | 93 | 94 | 94 | 96 | 96 |
| 1.2 | 2.76 (44.2) | 65 | 54 | 60 | 65 | 74 | 86 |
| 1.3 | 1.94 (31.1) | 62 | 60 | 69 | 74 | 84 | 91 |
| 1.4 | 2.81 (45.0) | 98 | 98 | 98 | 100 | 100 | 98 |

Notes:

(1) Rate of feed in pounds (kg) per hour

(2) Blowing agent: B* - 1,2-dichlorotetrafluoroethane; L* - 1,1,1,-trifluoro-2-chloroethane; O* - 1-chloro-1,1,-difluoroethane; W - 1-chloro-1,2,2,2-tetrafluoroethane (* for comparison)

(3) Rate of feed of blowing agent in pounds (kg) per hour

(4) Concentration of nucleation agent in parts per hundred parts of polyethylene

(5) Zinc stearate

(6) Density of foam body (30 days) in pounds per cubic foot (g/l).

From the results and data shown in Table I, it will be seen from Test No. 1.4 that 1-chloro-1,2,2,2-tetrafluoroethane is an effective volatile blowing agent for making dimensionally stable polyethylene foam.

27,053-F

Claims:

1. A process for making polyethylene foams which comprises heating normally solid aliphatic polyethylene at heat-plastifying temperatures between 90° and 200°C in admixture with a volatile blowing agent under pressure to form a flowable gel and extruding said gel into a zone of lower pressure sufficient to expand the extruded gel with resultant formation of a polyethylene foam particularly characterized in that from 0.02 to 0.31 gram molecular proportion of 1-chloro-1,2,2,2--tetrafluoroethane or 1-chloro-1,1,2,2-tetrafluoroethane per 100 grams of the polyethylene is used as the volatile blowing agent.

2. The process of Claim 1 wherein the volatile blowing agent is 1-chloro-1,2,2,2-tetrafluoroethane.

3. A process for making polyethylene foam which comprises feeding heat-plastified polyethylene at temperatures between 90° and 200°C and a volatile blowing agent in admixture with one another under pressure into a mixing and cooling zone wherein the mixture in blended into

27,053-F

a substantially uniform flowable composition and
continuously extruding the composition under pressure at a substantially uniform temperature between
90° and 200°C into a zone of sufficiently lower
pressure to cause expansion of the extruded material
with resultant formation of a polyethylene foam
particularly characterized in that from 0.02 to
0.31 gram molecular proportion of 1-chloro-1,2,2,2-
-tetrafluoroethane or 1-chloro-1,1,2,2-tetrafluoroethane per 100 grams of polyethylene is used
as the volatile blowing agent and from 0.1 to 2
percent by weight of a finely divided solid material
is used as a nucleating agent.

4.   The process of Claim 2 wherein the
finely divided solid material is a mixture of talc
and zinc stearate.

27,053-F

**European Patent Office**

| | DOCUMENTS CONSIDERED TO BE RELEVANT | | CLASSIFICATION OF THE APPLICATION (Int. Cl. ³) |
|---|---|---|---|
| Category | Citation of document with indication, where appropriate, of relevant passages | Relevant to claim | |
| X | RESEARCH DISCLOSURE 146, June 1976, no. 14623, pages 13,14 Industrial Opportunities Ltd., Homewell, Havant, Hampshire, U.K. "Hydrogen containing chlorofluorocarbons" <br><br> * Page 13, right-hand column, "For producing ...." * <br><br> -- | 1-3 | C 08 J 9/14 <br> C 08 L 23/06 |
| D | US - A - 3 327 031 (N.D. BOYER et al.) <br><br> * Claims 2,10,12; column 5, lines 15-65 * <br><br> -- | 1-3 | |
| | CHEMICAL ABSTRACTS, vol. 86, no. 20, 16th May 1977, page 40, no. 141014v Columbus, Ohio, U.S.A. <br><br> & JP - A - 77 04566 (ASAHI DOW LTD.) 13-01-1977 <br><br> * Whole abstract * <br><br> -- | 4 | **TECHNICAL FIELDS SEARCHED (Int.Cl. ³)** <br><br> C 08 J 9/14 |
| | CHEMICAL ABSTRACTS, vol. 86, no. 26, 27th June 1977, page 39, no. 190998c Columbus, Ohio, U.S.A. <br><br> & JP - A - 77 15560 (ASAHI DOW LTD.) 05-02-1977 <br><br> * Whole abstract * <br><br> -- | 4 | |
| | CHEMICAL ABSTRACTS, vol. 82, no. 10, 10th March 1975, page 75, no. 59053r Columbus, Ohio, U.S.A. | 4 | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| The Hague | 19-11-1979 | HALLEMEESCH |

EPO Form 1503.1  06.78

**European Patent Office**

**EUROPEAN SEARCH REPORT**

## DOCUMENTS CONSIDERED TO BE RELEVANT

| Category | Citation of document with indication, where appropriate, of relevant passages | Relevant to claim |
|---|---|---|
| | & JP - A - 74 74264 (ASAHI DOW LTD.)  <br> * Whole abstract * <br><br> ---- | |

**CLASSIFICATION OF THE APPLICATION (Int. Cl. 3)**

**TECHNICAL FIELDS SEARCHED (Int. Cl. 3)**

EPO Form 1503.2   06.78